(19) Europäisches Patentamt
European Patent Office
Office européen des brevets

(11) Veröffentlichungsnummer: **0 050 588**
**B1**

(12) # EUROPÄISCHE PATENTSCHRIFT

(45) Veröffentlichungstag der Patentschrift: **11.09.85**

(51) Int. Cl.⁴: **C 08 L 63/02**, D 21 H 3/02

(21) Anmeldenummer: **81810411.9**

(22) Anmeldetag: **12.10.81**

(54) **Verwendung eines Gemisches aus Tensiden und Umsetzungsprodukten aus Epoxyden, Fettaminen und Polyalkylenpolyaminoamiden als Papierleimungsmittel.**

(30) Priorität: **16.10.80 CH 7738/80**

(43) Veröffentlichungstag der Anmeldung: **28.04.82 Patentblatt 82/17**

(45) Bekanntmachung des Hinweises auf die Patenterteilung: **11.09.85 Patentblatt 85/37**

(84) Benannte Vertragsstaaten: **CH DE FR GB IT LI SE**

(56) Entgegenhaltungen:
**CH - A - 358 322**
**DE - A - 2 104 097**
**GB - A - 1 268 780**

(73) Patentinhaber: **CIBA-GEIGY AG, Postfach, CH-4002 Basel (CH)**

(72) Erfinder: **Töpfl, Rosemarie, Dorneckstrasse 68, CH-4143 Dornach (CH)**

**EP 0 050 588 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft die Verwendung als Papierleimungsmittel von Komponentengemischen aus

(A) einem Umsetzungsprodukt aus Epoxyden, Fettaminen und Polyalkylenpolyaminoamiden und
(B) mindestens einem Tensid.

Das im erfindungsgemäßen Gemisch als Komponente (A) eingesetzte Umsetzungsprodukt ist an sich bekannt und z. B. in den deutschen Offenlegungsschriften 2 104 097 und 2 755 142 beschrieben. Diese Druckschriften offenbaren ebenfalls die Herstellung und Verwendung der Komponente (A) als Papierleimungsmittel und die entsprechenden Verfahren zur Massen- und Oberflächenleimung von Papier unter Einsatz der Komponente (A) für sich allein. Die Verwendung der Komponente (A) für sich allein beim Leimen von Papier ist jedoch mit gewissen Nachteilen verbunden. Als schwerwiegendster Nachteil ist vor allem die geringe Verträglichkeit der Komponente (A) gegenüber den im Papierleimungsprozeß auftretenden Salzen zu erwähnen, die ihre Anwendungsmöglichkeiten wegen ihrer hohen Koagulationsanfälligkeit in Gegenwart von z. B. Sulfationen oder sogenannten Schadstoffen (Harzstoffe aus Holzschliff) bei der Papierleimung einschränkt. Bei Verwendung der Komponente (A) für sich allein bewirkt eine zu hohe Elektrolytkonzentration infolge eines hohen Salzgehaltes des mitverwendeten Wassers oder die Gegenwart von Schadstoffen beim Einsetzen von Holzschliff minderer Qualität, wie dies in der Praxis öfters vorkommt, Ausflockungen in der wäßrigen Leimflotte, die zu schlechten Leimungseffekten führen und insbesondere den Leimungsvorgang beeinträchtigende, harzige Ablagerungen in den Papiermaschinen bewirken.

Der vorliegenden Erfindung liegt die Aufgabe zugrunde, ein Leimungsmittel zur Verfügung zu stellen, das die vorstehend geschilderten Nachteile des Umsetzungsproduktes der angegebenen Art nicht aufweist. Nur wurde unerwarteterweise gefunden, daß das Komponentengemisch aus dem angegebenen Umsetzungsprodukt als Komponente (A) mit einem Tensid als Komponente (B) ein Leimungsmittel darstellt, das eine nicht voraussehbare, besonders hohe Salzverträglichkeit aufweist und deshalb die genannten Nachteile weitgehend aufhebt.

Gegenstand der vorliegenden Erfindung ist somit die neue Verwendung eines Komponentengemisches als Papierleimungsmittel, die dadurch gekennzeichnet ist, daß das Gemisch als Komponente (A) ein Umsetzungsprodukt aus

(a) 1,0 Epoxygruppenäquivalent eines Diglycidyläthers des 2,2-Bis-(4'-hydroxyphenyl)-propans,
(b) 0,10 bis 0,85 Aminogruppenäquivalent mindestens eines primären Fettamins mit 12 bis 24 Kohlenstoffatomen,
(c) 0,1 bis 2,0 Aminogruppenäquivalenten eines Polyalkylenpolyaminoamids aus
  (c') einer polymerisierten, aliphatischen, ungesättigten Fettsäure, die sich von Fettsäuren mit 16 bis 22 Kohlenstoffatomen ableitet, und
  (c'') einem aliphatischen Polyalkylenpolyamin mit 4 bis 12 Kohlenstoffatomen und
(d) 0 bis 1,0 Mol eines Epihalogenhydrins oder eines Nitrils einer äthylenisch ungesättigten Monocarbonsäure mit 3 oder 4 Kohlenstoffatomen,

wobei die Komponente (A) in Gegenwart eines inerten, organischen Lösungsmittels gegebenenfalls bei erhöhter Temperatur erhältlich ist und als Komponente (B) mindestens ein Tensid enthält,
wobei das Gemisch durch Zugabe mindestens einer anorganischen oder organischen Säure mit höchstens 4 Kohlenstoffatomen einen pH-Wert von 3 bis 7 aufweist und wasserlöslich oder wasserdispergierbar ist.

Die erfindungsgemäß verwendeten Komponentengemische enthalten vorzugsweise Umsetzungsprodukte (A), die aus Diglycidyläther des 2,2-Bis(4'-hydroxyphenyl)-propans, auch Bisphenol A genannt, als Umsetzungskomponente (a) erhältlich sind, welche vorzugsweise einen Epoxydgehalt von 1,8 bis 5,8, insbesondere 5 bis 5,5 Epoxygruppenäquivalenten/kg aufweisen. Besonders bevorzugte Epoxyde dieser Art entsprechen der Formel

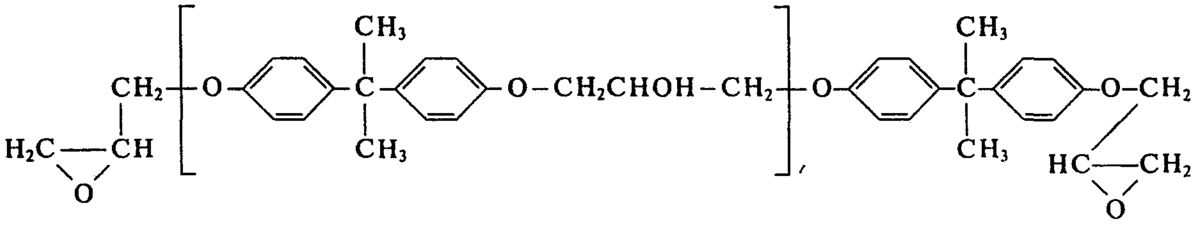

worin z eine Durchschnittszahl im Wert von 0 bis 0,65 bedeutet. Hierbei steht 0 als Wert für z im Vordergrund des Interesses. Solche Epoxyde werden z. B. durch Umsetzung von 2,2-Bis-(4'-hydroxyphenyl)-propan mit Epichlorhydrin oder Bis-halogenhydrinverbindungen und nachfolgender Behandlung mit einer Base erhalten.

Als gut geeignete Umsetzungskomponente (b) haben sich vor allem gesättigte oder ungesättigte primäre Fettamine mit 12 bis 24, vorzugsweise 16 bis 22 und insbesondere 16 bis 18 Kohlenstoffatomen erwiesen. Bei den Aminen handelt es sich also z. B. um Lauryl-, Myristyl-, Arachidyl- oder Behenylamin und insbesondere um Palmityl-, Stearyl-, Palmitolein- oder Oleylamin. Vor allem kommen Gemische solcher Amine, wie sie als technische Produkte erhältlich sind, in Betracht.

Die als Komponente (c') zur Bildung des Polyalkylenpolyaminoamids (c) eingesetzten polymerisierten ungesättigten Fettsäuren sind vorzugsweise di- bis trimerisierte Fettsäuren, welche sich von Monocarbonsäuren mit 12 bis 24, vorzugsweise 16 bis 22 und insbesondere 16 bis 18 Kohlenstoffatomen ableiten. Diese Monocarbonsäuren sind Fettsäuren mit mindestens einer, vorzugsweise 2 bis 5 äthylenisch ungesättigten Bindungen. Vertreter dieser Klasse von Säuren sind z. B. Laurolein-, Myristolein-, Palmitolein-, Physetöl-, Öl-, Elaidin-, Petroselin-, Eikosen-, Cetolein-, Gadolein-, Eruka-, vorzugsweise Eläostoarin-, Parinar-, Arachidon-, Clupanodon-, Nisin- und insbesondere Linol- und Linolensäure. Diese Fettsäuren können aus natürlichen Ölen pflanzlicher oder tierischer Herkunft, worin sie vor allem als Glyceride vorkommen, gewonnen werden. Die erfindungsgemäß eingesetzten di- bis trimerisierten Fettsäuren (c') werden in bekannter Weise durch Dimerisation von Monocarbonsäuren der angegebenen Art erhalten. Die sogenannten dimerisierten Fettsäuren stellen technische Gemische dar, welche stets einen Gehalt an trimerisierten und einen kleinen Gehalt an monomeren Säuren aufweisen. Besonders geeignet als Komponente (c') ist die di- bis trimerisierte Linol- oder Linolensäure. Die technischen Gemische dieser Säuren enthalten in der Regel 75 bis 95 Gewichtsprozent dimerisierter Säure, 4 bis 25 Gewichtsprozent trimerisierter Säure und eine Spur bis 3 Gewichtsprozent monomerer Säure. Das Molverhältnis von dimerisierter zu trimerisierter Säure beträgt demnach etwa 5 : 1 bis 36 : 1.

Als Komponente (c'') eignen sich vor allem Polyalkylenpolyamine der Formel

$$H_2N-(CH_2-CH_2-NH)_n-CH_2-CH_2-NH_2, \qquad (2)$$

worin n 1 bis 5, vorzugsweise 1, 2 oder 3 ist, d. h. Diäthylentriamin, Triäthylentetramin oder Tetraäthylenpentamin, wobei dem Triäthylentetramin eine besondere Bedeutung zukommt. Im Falle von Amingemischen kann man für n auch einen nicht ganzzahligen Durchschnittswert annehmen, z. B. zwischen 1 und 2. Technische Amingemische der angegebenen Art sind bevorzugt.

Als Komponente (c) von besonderem Interesse wird ein Polyalkylenpolyaminamid aus di- bis trimerisierter Linol- oder Linolensäure und Triäthylentetramin eingesetzt.

Primäre Fettamine als Komponente (b) und Polyalkylenpolyaminoamide als Komponente (c), welche jeweils 3 bis 5, vorzugsweise 3,0 bis 4,5 Aminogruppenäquivalente pro kg aufweisen, stehen im Vordergrund des Interesses.

Als fakultative Komponente (d) wird z. B. das Nitril der Methacryl- oder vor allem der Acrylsäure eingesetzt. Indessen ist ein Epihalogenhydrin dem Nitril gegenüber bevorzugt, wobei vor allem Epibrom- und insbesondere Epichlorhydrin in Frage kommt.

Die in den erfindungsgemäß verwendeten Komponentengemischen enthaltenen Umsetzungsprodukte (A) sind vorzugsweise aus 0,4 bis 0,8 Aminogruppenäquivalenten der Komponente (b) und 0,3 bis 1,5 Aminogruppenäquivalenten der Komponente (c) pro Epoxygruppenäquivalent der Komponente (a) erhältlich. Wird die fakultative Komponente (d) zur Bildung der Umsetzungsprodukte (A) zusätzlich zu den Komponenten (a), (b) und (c) mitverwendet, so wird vorzugsweise 0,1 bis 0,5 Mol der Komponente (d) pro Epoxygruppenäquivalent der Komponente (a) eingesetzt. Indessen sind Umsetzungsprodukte (A), die ohne Mitverwendung der zusätzlichen, fakultativen Komponente (d) erhältlich sind, bevorzugt.

Die Umsetzung der Komponenten (a), (b), (c) und gegebenenfalls (d) zur Bildung des Umsetzungsproduktes (A) wird bei 15 bis 100° C, z. B. bei Raumtemperatur (15 bis 25° C), vorzugsweise jedoch bei erhöhter Temperatur von z. B. 60 bis 95, insbesondere 80 bis 90° C, durchgeführt.

Das organische Lösungsmittel, in dessen Gegenwart die Umsetzungsreaktionen der Komponenten (a), (b), (c) und gegebenenfalls (d) durchgeführt werden, ist inert, d. h., vermag mit keiner der erwähnten Komponenten zu reagieren. Als organische Lösungsmittel kommen in erster Linie wasserlösliche organische Lösungsmittel in Betracht, und zwar zweckmäßig solche, die mit Wasser beliebig mischbar sind. Als Beispiele seien cycloaliphatische und aliphatische Äther mit 3 oder vorzugsweise 2 Sauerstoffatomen und 2 bis 8, vorzugsweise 4 bis 8 Kohlenwasserstoffatomen wie Dioxan, Äthylenglykolmono-n-butyläther (= n-Butylglykol), Diäthylenglykolmono-n-butyläther und insbesondere Alkanole mit 1 bis 4 Kohlenstoffatomen, z. B. Isopropanol, Äthanol und Methanol, erwähnt. Daneben ist es aber auch möglich, die Umsetzungen in Gegenwart von wasserunlöslichen organischen Lösungsmitteln durchzuführen, z. B. in Benzinkohlenwasserstoffen wie Benzin, Petroläther, Benzol oder halogenierten oder mit niederen Alkylgruppen substituierten Benzolen, wie Toluol, Xylol, Chlorbenzol; alicyclischen Verbindungen wie Tetralin oder Cyclohexan; halogenierten Kohlenwasserstoffen mit vorzugsweise 1 oder 2 Kohlenstoffatomen wie Methylenchlorid, Methylenbromid, Chloroform, Tetrachlorkohlenstoff, Äthylenchlorid, Äthylenbromid, s-Tetrachloräthan und vor allem Trichloräthylen oder Perchloräthylen. In der Regel werden alle Umsetzungen in gleichen Lösungsmitteln durchgeführt, wobei Isopropanol im

Vordergrund des Interesses steht.

Die Reihenfolge, mit welcher die Komponenten (a), (b), (c) und gegebenenfalls (d) zur Bildung der Umsetzungsprodukte (A) miteinander reagiert werden, ist von untergeordneter Bedeutung. So werden z. B. zuerst die Komponenten (a) und (b) zu einem Epoxyd-Fettamin-Umsetzungsprodukt vorkondensiert, das mit der Komponente (c) weiter umgesetzt wird.

In der Regel wird jedoch vorzugsweise die Komponente (b) vorgelegt und anschließend zuerst mit der Komponente (a) und dann mit der Komponente (c) umgesetzt. Wird die fakultative Komponente (d) mitverwendet, so wird sie vorzugsweise zuletzt, d. h. nach dem Umsetzen der Komponenten (a), (b) und (c) in der angegebenen Reihenfolge, eingesetzt.

Als Komponente (B) des erfindungsgemäß verwendeten Komponentengemisches, die in der Regel stets mit dem vorgelegten Umsetzungsprodukt als Komponente (A) unmittelbar nach beendeter Umsetzung der Komponenten (a), (b), (c) und gegebenenfalls (d) in den angegebenen Lösungsmitteln gegebenenfalls bei erhöhter Temperatur im bevorzugten angegebenen Bereich vermischt wird, kommen im allgemeinen alle handelsüblichen Tenside in Betracht. Somit sind sowohl anionische, kationische als auch amphotere und nicht ionogene Tenside geeignet, als Komponente (B) des erfindungsgemäß verwendeten Komponentengemisches eingesetzt zu werden.

Bevorzugt sind jedoch als Komponente (B) gegebenenfalls als Alkalimetall-, Erdalkalimetall- oder Ammoniumsalze vorliegende, alkoxylierte und veresterte oder quaternierte Fettamine, Fettsäuren, Fettsäureamide, Alkylphenole oder Alkanole mit je 8 bis 22 Kohlenstoffatomen im Fett- und Alkylrest, Sulfobernsteinsäurederivate, die mit einem oder zwei gegebenenfalls alkoxylierten Alkyl- oder Alkenylresten mit je 8 bis 22 Kohlenstoffatomen im Alkyl- und Alkenylteil substituiert sind oder Imidazoliniumderivate, die in 1-Stellung mit einem Carboxymethyl- und gegebenenfalls einem Äthyl-2(carboxymethyläther)-rest und in 2-Stellung mit Alkyl oder Alkenyl mit je 8 bis 22 Kohlenstoffatomen substituiert sind.

Solche bevorzugte Komponenten (B) sind gegebenenfalls als Alkalimetall- oder Ammoniumsalze vorliegende Addukte aus Äthylenoxyd oder Propylenoxyd und Fettaminen, Alkylphenolen oder Alkanolen mit 8 bis 22 Kohlenstoffatomen, wobei die Addukte mit einer anorganischen Säure verestert oder mit einem Epihalogenhydrin, Alkyl- oder Arylchlorid oder Dialkylsulfat quaterniert sind, ferner Dialkylsulfobernsteinsäuren mit je 8 bis 22 Kohlenstoffatomen im Alkylrest oder Imidazoliniumderivate, die in 1-Stellung mit einem Carboxymethyl- und einem Äthyl-2(carboxymethyläther)-rest und in 2-Stellung mit Alkyl oder Alkenyl mit 8 bis 18 Kohlenstoffatomen substituiert sind.

Die Äthylen- oder Propylenoxydaddukte der angegebenen Art sind den Sulfobernstein- oder Imidazoliniumderivaten der angegebenen Art gegenüber bevorzugt.

Demgemäß stehen im Vordergrund des Interesses als Komponenten (B) gegebenenfalls als Ammonium-, Kalium- oder Natriumsalze vorliegende, insbesondere als Natriumsalze vorliegende Addukte aus Äthylenoxyd und Alkanolen mit 8 bis 12 Kohlenstoffatomen, vorzugsweise aus Äthylenoxyd und Alkylphenolen mit 8 bis 12 Kohlenstoffatomen im Alkylrest oder insbesondere aus Äthylenoxyd und Fettaminen mit 12 bis 22 Kohlenstoffatomen, wobei die Addukte mit Schwefelsäure, vorzugsweise mit Phosphorsäure oder insbesondere mit Sulfaminsäure verestert oder mit Methyl-, Äthyl- oder Benzylchlorid oder vorzugsweise mit Diäthylsulfat oder insbesondere mit Dimethylsulfat quaterniert sind.

In den erfindungsgemäß verwendeten Komponentengemischen sind die Komponenten (A) und (B) in einem bevorzugten Gewichtsverhältnis (A) : (B) von 90 : 10 bis 99 : 1 enthalten. In anderen Worten: enthalten bevorzugte Komponentengemische 90 bis 99 Gewichtsprozent der Komponente (A) und 1 bis 10 Gewichtsprozent der Komponente (B), wobei die Summe dieser Mengen an Komponenten (A) und (B) im Komponentengemisch stets 100 Gewichtsprozent ergibt.

Für den zur Einstellung des pH-Wertes des Komponentengemischs auf 3 bis 7 benötigten Säurezusatz kommen sowohl anorganische als auch organische Säuren mit höchstens 4 Kohlenstoffatomen in Frage. Als anorganische Säuren kommen vor allem Salz-, Salpeter-, vorzugsweise Phosphor- und insbesondere Orthophosphor- oder Sulfaminsäure in Betracht. Als organische Säuren kommen vorzugsweise gesättigte Di- oder insbesondere Monocarbonsäuren mit höchstens 4 Kohlenstoffatomen wie Malon-, Bernstein-, vorzugsweise Oxal- und insbesondere Ameisen-, Essig- und Propionsäure in Betracht. Gemische der genannten Säuren können ebenfalls eingesetzt werden. Die flüchtigen, gesättigten Monocarbonsäuren wie Ameisensäure und insbesondere Essigsäure stehen im Vordergrund des Interesses.

Der pH-Wert von besonders bevorzugten Komponentengemischen wird mit den Säuren der angegebenen Art auf 4 bis 6 gestellt.

In der Regel wird das organische Lösungsmittel enthaltende Komponentengemisch aus (A) und (B) mit Wasser verdünnt. Bevorzugt weisen solche mit Wasser verdünnte Komponentengemische einen Gehalt von 10 bis 40 Gewichtsprozent an Komponente (A) und (B), berechnet auf Trockensubstanz. Sie liegen als wäßrige, lagerstabile, homogene, feinverteilte Emulsionen vor, sofern ein wasserunlösliches Lösungsmittel der angegebenen Art eingesetzt wird, oder insbesondere als wäßrige, lagerstabile Lösung vor, sofern als bevorzugtes Lösungsmittel ein solches eingesetzt wird, das mit Wasser beliebig mischbar ist. Selbst nach einer Lagerung von mehreren Monaten treten in solchen lagerstabilen Emulsionen oder Lösungen keinerlei Ausflockungen oder Abscheidungen auf.

Das Verfahren zur Herstellung des erfindungsgemäß verwendeten Komponentengemisches aus (A)

und (B) ist dadurch gekennzeichnet, daß man

(a) 1,0 Epoxygruppenäquivalent eines Diglycidyläthers des 2,2-Bis-(4'-hydroxyphenyl)-propans,
(b) 0,10 bis 0,85 Aminogruppenäquivalent mindestens eines primären Fettamins mit 12 bis 24 Kohlenstoffatomen,
(c) 0,1 bis 2,0 Aminogruppenäquivalente eines Polyalkylenpolyaminoamids aus
 (c') einer polymerisierten, aliphatischen, ungesättigten Fettsäure, die sich von Fettsäuren mit 16 bis 22 Kohlenstoffatomen ableitet, und
 (c'') einem aliphatischen Polyalkylenpolyamin mit 4 bis 12 Kohlenstoffatomen und
(d) 0 bis 1,0 Mol eines Epihalogenhydrins oder eines Nitrils einer äthylenisch ungesättigten Monocarbonsäure mit 3 oder 4 Kohlenstoffatomen

in Gegenwart eines inerten, organischen Lösungsmittels gegebenenfalls bei erhöhter Temperatur miteinander umsetzt,
das erhaltene Umsetzungsprodukt als Komponente (A) mit mindestens einem Tensid als Komponente (B) gegebenenfalls bei erhöhter Temperatur vermischt,
das Gemisch durch Zugabe mindestens einer anorganischen oder organischen Säure mit höchstens 4 Kohlenstoffatomen auf einen pH-Wert von 3 bis 7 einstellt und
gegebenenfalls auf einen Gehalt, berechnet auf Trockensubstanz, von 10 bis 40 Gewichtsprozent mit Wasser verdünnt.

Bei ihrer erfindungsgemäßen Verwendung als Papierleimungsmittel werden die Komponentengemische aus (A) und (B) sowohl für die Oberflächenleimung als auch insbesondere für die Massenleimung eingesetzt. Im Verfahren zur Oberflächenleimung von Papier wird das Papier mit einer wäßrigen, verdünnten Leimflotte die das Komponentengemisch aus (A) und (B) enthält, imprägniert und getrocknet, während im bevorzugten Verfahren zur Massenleimung von Papier eine das Komponentengemisch aus (A) und (B) enthaltende Leimflotte in die wäßrige, hochverdünnte Faserstoffsuspension eingearbeitet wird.

Vor ihrer erfindungsgemäßen Verwendung als Papierleimungsmittel bei der Oberflächenleimung wird das Komponentengemisch aus (A) und (B) zuerst mit Wasser so verdünnt, daß wäßrige Leimflotten entstehen, deren Gehalt, berechnet auf Trockensubstanz, 0,02 bis 1,0, vorzugsweise 0,02 bis 0,2 Gewichtsprozent beträgt. Bei der Oberflächenleimung wird das Papier mit der verdünnten Leimflotte im allgemeinen bei Raumtemperatur (15 bis 25° C) z. B. durch Aufsprühen oder insbesondere durch Foulardieren imprägniert und anschließend bei 60 bis 140° C, vorzugsweise 90 bis 110° C während 0,1 bis 30, vorzugsweise 1 bis 20 Minuten getrocknet. Nach dem Trocknen werden Flächenaufträge der Komponentengemische, berechnet auf Trockensubstanz, von 50 bis 150, vorzugsweise 60 bis 120 mg/$m^2$ erhalten.

Vor ihrer erfindungsgemäßen Verwendung als Papierleimungsmittel bei der bevorzugten Massenleimung wird das Komponentengemisch aus (A) und (B) ebenfalls mit Wasser verdünnt, wobei aber in der Regel die vorstehend angegebenen lagerstabilen, 10- bis 40gewichtsprozentigen Emulsionen oder Lösungen als wäßrige Leimflotte eingesetzt werden. Bei der Massenleimung werden vorzugsweise 0,2 bis 2,0, insbesondere 0,4 bis 1,0 Gewichtsprozent des Leimungsmittels, berechnet auf Trockensubstanz und bezogen auf den Feststoffgehalt der Faserstoffsuspension, auch Stoffdichte genannt, unter Einschluß von gegebenenfalls vorhandenen Bindemitteln wie etwa Stärke in Form der vorstehend genannten, vorzugsweise 10- bis 40gewichtsprozentigen, verdünnten Leimflotte vor dem Stoffauflauf der Papiermaschine in die Faserstoffsuspension eingearbeitet.

Mit bereits geringen Mengen an erfindungsgemäß verwendeten Komponentengemischen können auf Papier sehr gute Leimungseffekte erzielt werden, die aufgrund von positiven Testergebnissen wie Wasseraufnahme nach Cobb und Tintenschwimmdauer bestätigt werden. Insbesondere ermöglichen bei der Oberflächenleimung die geringen Flächenaufträge eine rasche Arbeitsweise, so daß bei einer Trocknungstemperatur von z. B. 90 bis 110° C bereits innerhalb etwa 1 bis 20 Minuten gute Leimungen erzielt werden. Bei der bevorzugten Massenleimung ermöglicht die geringe Menge an erfindungsgemäß verwendeten Komponentengemischen ebenfalls eine rasche Arbeitsweise, die sich in der Praxis in hohen, vorteilhaften Laufgeschwindigkeiten der eingesetzten Papiermaschinen niederschlägt. Darüber hinaus weisen die erfindungsgemäß verwendeten Komponentengemische eine gute Verträglichkeit mit den üblichen, in der Papierindustrie verwendeten Hilfsstoffen, z. B. Bindemitteln wie etwa Stärke, und sonstigen Zusatzstoffen auf.

Als wesentliche gute Eigenschaft der erfindungsgemäß verwendeten Komponentengemische aus (A) und (B) sei aber auf ihre bereits erwähnte, besonders hohe Salzverträglichkeit hingewiesen, welche die anfangs genannten Vorteile zur Folge hat.

Die in den nachstehenden Herstellungsvorschriften und Beispielen angegebenen Teile und Prozente sind Gewichtseinheiten.

Herstellungsvorschriften für die Komponente (A)

Vorschrift A

Einer Lösung aus 33,6 Teilen (0,12 Aminogruppenäquivalenten) eines technischen Fettamingemisches aus 30% Palmitylamin, 30% Stearylamin und 40% Oleylamin als Komponente (b) (Amingehalt des Gemisches: 3,57 Äquivalente/kg) in 9,5 Teilen Isopropanol wird innerhalb von 1 Stunde eine Lösung aus 45,6 Teilen (0,24 Epoxygruppenäquivalenten) eines aus 2,2-Bis(4'-hydroxyphenyl)-propan und Epichlorhydrin gebildeten Epoxyds als Komponente (a) (Epoxydgehalt: 5,26 Äquivalente/kg) in 9,5 Teilen Isopropanol bei 80 bis 90° C zugegeben. Nach beendeter Epoxydzugabe wird das Reaktionsgemisch während 1/4 Stunde bei 85 bis 90° C gehalten. Anschließend wird zum Reaktionsgemisch eine Lösung aus 26 Teilen (0,11 Aminogruppenäquivalenten) eines Polyäthylenpolyaminoamids als Komponente (c) aus polymerisierter Linolsäure und Triäthylentetramin (Amingehalt des Polyaminoamids: 4,23 Äquivalente/kg) in 10 Teile Isopropanol gegeben. Nach der Polyaminoamidzugabe wird das Reaktionsgemisch während 2 Stunden bei 85° C gehalten, wobei die Komponenten (a), (b) und (c) zur Komponente (A) umgesetzt werden. Man erhält 105,2 Teile der Komponente (A) in 29 Teilen Isopropanol.

Vorschrift B

Einer Lösung aus 26,3 Teilen (0,097 Aminogruppenäquivalenten) eines technischen Fettamingemisches aus 30% Palmitylamin, 30% Stearylamin und 40% Oleylamin als Komponente (b) (Amingehalt des Gemisches: 3,68 Äquivalente/kg) in 9 Teilen Isopropanol wird innerhalb von 1 Stunde eine Lösung aus 26,4 Teilen (0,14 Epoxygruppenäquivalenten) eines aus 2,2-Bis(4'-hydroxyphenyl)-propan und Epichlorhydrin gebildeten Epoxyds als Komponente (a) (Epoxydgehalt: 5,30 Äquivalente/kg) in 9 Teilen Isopropanol bei 80 bis 85° C zugegeben. Nach beendeter Epoxydzugabe wird das Reaktionsgemisch während 1/4 Stunde bei 85 bis 90° C gehalten. Anschließend wird zum Reaktionsgemisch eine Lösung aus 52,5 Teilen (0,21 Aminogruppenäquivalenten) eines Polyäthylenpolyaminoamids als Komponente (c) aus polymerisierter Linolsäure und Triäthylentetramin (Amingehalt des Polyaminoamids: 4,00 Äquivalente/kg) in 11 Teilen Isopropanol gegeben. Nach der Polyaminoamidzugabe wird das Reaktionsgemisch während 2 Stunden bei 85° C gehalten, wobei die Komponenten (a), (b) und (c) zur Komponente (A) umgesetzt werden. Man erhält 105,2 Teile der Komponente (A) in 29 Teilen Isopropanol.

Vorschrift C

Einer Lösung aus 38,8 Teilen (0,14 Aminogruppenäquivalenten) eines technischen Fettamingemisches aus 30% Palmitylamin, 30% Stearylamin und 40% Oleylamin als Komponente (b) (Amingehalt des Gemisches: 3,61 Äquivalente/kg) in 10 Teilen Äthylenglykolmono-n-butyläther wird innerhalb von 1 Stunde eine Lösung aus 45,4 Teilen (0,24 Epoxygruppenäquivalenten) eines aus 2,2-Bis(4'-hydroxyphenyl)-propan und Epichlorhydrin gebildeten Epoxyds als Komponente (a) (Epoxydgehalt: 5,29 Äquivalente/kg) in 10 Teilen Äthylenglykolmono-n-butyläther bei 80 bis 85° C zugegeben. Nach beendeter Epoxydzugabe wird das Reaktionsgemisch während 1/4 Stunde bei 85 bis 90° C gehalten. Anschließend wird zum Reaktionsgemisch eine Lösung aus 21 Teilen (0,084 Aminogruppenäquivalenten) eines Polyäthylenpolyaminoamids als Komponente (c) aus polymerisierter Linolsäure und Triäthylentetramin (Amingehalt des Polyaminoamids: 4,00 Äquivalente/kg) in 9 Teilen Äthylenglykol-n-butyläther gegeben. Nach der Polyaminoamidzugabe wird das Reaktionsgemisch während 2 Stunden bei 85° C gehalten, wobei die Komponenten (a), (b) und (c) zur Komponente (A) umgesetzt werden. Man erhält 105,2 Teile der Komponente (A) in 29 Teilen Äthylenglykolmono-n-butyläther.

Vorschrift D

Einer Lösung aus 33,6 Teilen (0,12 Aminogruppenäquivalenten) eines technischen Fettamingemisches aus 30% Palmitylamin, 30% Stearylamin und 40% Oleylamin als Komponente (b) (Amingehalt des Gemisches: 3,57 Äquivalente/kg) in 9,5 Teilen Isopropanol wird innerhalb von 1 Stunde eine Lösung aus 45,6 Teilen (0,24 Epoxygruppenäquivalenten) eines aus 2,2-Bis(4'-hydroxyphenyl)-propan und Epichlorhydrin gebildeten Epoxyds als Komponente (a) (Epoxydgehalt: 5,26 Äquivalente/kg) in 9,5 Teilen Isopropanol bei 80 bis 90° C zugegeben. Nach beendeter Zugabe wird das Reaktionsgemisch während 1/4 Stunde bei 85 bis 90° C gehalten. Anschließend wird zum Reaktionsgemisch eine Lösung aus 26 Teilen (0,11 Aminogruppenäquivalenten) eines Polyäthylenpolyaminoamids als Komponente (c) aus polymerisierter Linolsäure und Triäthylentetramin (Amingehalt des Polyaminoamids: 4,23 Äquivalente/kg) in 9,0 Teilen Isopropanol gegeben. Nach der Polyaminoamidzugabe wird das Reaktionsgemisch während 2 Stunden bei 85° C gehalten. Danach werden als Komponente (d) 2,22 Teile Epichlorhydrin (0,024 Mol) ins Reaktionsgemisch zugegeben, und anschließend wird das Reaktionsgemisch

während 10 Minuten bei 85°C gehalten, wobei die Komponenten (a), (b), (c) und (d) zur Komponente (A) umgesetzt werden. Man erhält 107,4 Teile der Komponente (A) in 28 Teilen Isopropanol.

Beispiele 1 bis 20

Den 105,2 Teilen der gemäß Vorschrift A erhaltenen Komponente (A) in Isopropanol werden unmittelbar nach der Umsetzung der Komponenten (a), (b) und (c) bei 85°C 1,6 bzw. 5,13 oder 10,5 Teile eines Tensids als Komponente (B) zugegeben, dessen Zusammensetzung und eingesetzte Menge in der nachfolgenden Tabelle I angegeben ist. Nach der Tensidzugabe wird das Reaktionsgemisch noch während $^1/_2$ Stunde bei 85°C gehalten und anschließend mit 4 Teilen Eisessig versetzt. Das Reaktionsgemisch wird dann mit entionisiertem Wasser so verdünnt, daß eine dünnflüssige Lösung erhalten wird, deren Gehalt, berechnet auf Trockensubstanz, 30,5% und deren pH-Wert 5,0 beträgt. So wird bei Einsatz von 1,6 Teilen der Komponente (B) das Reaktionsgemisch mit 210 Teilen Wasser zu 349,8 Teilen der 30,5%igen Lösung, bei Einsatz von 5,13 Teilen der Komponente (B) das Reaktionsgemisch mit 218,4 Teilen Wasser zu 361,7 Teilen der 30,5%igen Lösung und bei Einsatz von 10,5 Teilen der Komponente (B) das Reaktionsgemisch mit 230,6 Teilen Wasser zu 379,3 Teilen der 30,5%igen Lösung verdünnt.

Die Salzverträglichkeit der erhaltenen Lösung des Komponentengemisches aus (A) und (B) (gemessen durch Titration mit einer Natriumsulfatlösung einer mit entionisiertem Wasser verdünnten Probe der erhaltenen Lösung bis zum Koagulationspunkt, bei welchem die anfänglich klare Lösung unter Bildung von Flocken ausfällt) ist ebenfalls in der nachfolgenden Tabelle I angegeben. Zum Vergleich beträgt die Salzverträglichkeit der gemäß Vorschrift A und gemäß Beispielen 1 bis 20 analog, jedoch in Abwesenheit des Tensids als Komponente (B) mit Eisessig auf pH 5,0 eingestellte und mit Wasser auf den Gehalt von 30,5% verdünnte Lösung des Umsetzungsproduktes [Komponente (A) allein] 0,64 g $Na_2SO_4$/l.

Tabelle I

| Beispiel Nr. | Eingesetztes Tensid | Eingesetzte Menge an Tensid Teile | Gewichtsverhältnis (A):(B) | Salzverträglichkeit g $Na_2SO_4$/l |
|---|---|---|---|---|
| 1 | Addukt aus 1 Mol eines technischen Amingemisches aus 30% Palmitylamin, 30% Stearylamin, 40% Oleylamin und 13 Mol Äthylenoxyd, das mit 1 Mol Sulfaminsäure verestert ist. | 1,6 | 98,50:1,50 | 2,52 |
| 2 | Addukt aus 1 Mol des Amingemisches gemäß Beispiel 1 und 8 Mol Äthylenoxyd, das mit 2 Mol Sulfaminsäure verestert ist. | 5,13 | 95,35:4,65 | 2,31 |
| 3 | Addukt aus 1 bis 2 Mol des Amingemisches gemäß Beispiel 1 und 13 Mol Äthylenoxyd, das mit 1 Mol Orthophosphorsäure verestert ist. | 5,13 | 95,35:4,65 | 5,08 |
| 4 | Addukt aus 1 bis 2 Mol Dodecylamin und 8 Mol Äthylenoxyd, das mit 1 Mol Orthophosphorsäure verestert ist. | 5,13 | 95,35:4,65 | 1,25 |
| 5 | Addukt aus 1 Mol eines technischen Amingemisches aus 10% Stearylamin, 55% Arachylamin, 35% Behenylamin und 30 Mol Äthylenoxyd, das mit 1 Mol Dimethylsulfat quaterniert ist. | 1,6 | 98,50:1,50 | 1,85 |
| 6 | Addukt gemäß Beispiel 5 | 5,13 | 95,35:4,65 | 10,0 |

Fortsetzung

| Beispiel Nr. | Eingesetztes Tensid | Eingesetzte Menge an Tensid Teile | Gewichtsverhältnis (A) : (B) | Salzverträglichkeit g $Na_2SO_4$/l |
|---|---|---|---|---|
| 7 | Addukt aus 1 Mol des Amingemisches gemäß Beispiel 1 und 7,7 Mol Äthylenoxyd | 5,13 | 95,35 : 4,65 | 4,56 |
| 8 | Gemisch 1 : 1 aus dem Addukt gemäß Beispiel 1 und dem Addukt gemäß Beispiel 5 | 5,13 | 95,35 : 4,65 | 10,0 |
| 9 | Schwefelsäuremonoester eines Addukts aus 1 Mol p-Nonylphenol und 30 Mol Äthylenoxyd (als Na-Salz) | 5,13 | 95,35 : 4,65 | 2,49 |
| 10 | Di-(2-Äthylhexyl)-sulfosuccinat (als Na-Salz). | 5,13 | 95,35 : 4,65 | 1,53 |
| 11 | 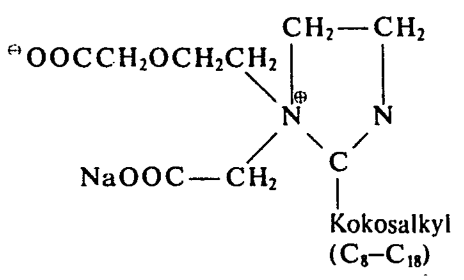 | 5,13 | 95,35 : 4,65 | 2,42 |
| 12 | Addukt aus 1 Mol Octylalkohol und 5 Mol Äthylenoxyd, das mit 1 Mol Orthophosphorsäure verestert ist (als Na-Salz). | 5,13 | 95,35 : 4,65 | 1,62 |
| 13 | Addukt aus 2 Mol p-Nonylphenol und 20 Mol Äthylenoxyd, das mit 1 Mol Orthophosphorsäure verestert ist. | 5,13 | 95,35 : 4,65 | 1,08 |
| 14 | Gemisch 1 : 1 aus dem Addukt gemäß Beispiel 1 und dem Addukt gemäß Beispiel 5. | 10,5 | 90,92 : 9,08 | 10,0 |
| 15 | Lauryltrigylkoläthersulfat-Na-Salz | 5,13 | 99,35 : 4,65 | 1,74 |
| 16 | Addukt aus Nonylphenol und 9 Mol Äthylenoxyd | 5,13 | 99,35 : 4,65 | 7,56 |
| 17 | Addukt aus Oleylalkohol und 20 Mol Äthylenoxyd | 5,13 | 99,35 : 4,65 | 10,0 |
| 18 | Addukt aus Stearylalkohol und 20 Mol Äthylenoxyd | 5,13 | 99,35 : 4,65 | 10,0 |
| 19 | Dinatriumricinolamidsulfosuccinat | 5,13 | 99,35 : 4,65 | 1,15 |
| 20 | Dinatriumlaurinsäureäthanolamidsulfosuccinat | 5,13 | 99,35 : 4,65 | 1,1 |

Ähnliche Ergebnisse, d. h., eine wesentliche Verbesserung der Salzverträglichkeit der erhaltenen Lösungen der Komponentengemische aus (A) und (B) im Vergleich zur Salzverträglichkeit der Komponenten (A) allein, werden auch erzielt, falls man an Stelle der Komponente (A) gemäß Vorschrift A die Komponenten (A) gemäß einer der Vorschriften B oder C einsetzt und mit je einem der Tenside gemäß einem der Beispiele 1 bis 20 analog vermischt.

## Beispiel 21

Zu 107,4 Teilen der gemäß Vorschrift D erhaltenen Komponente (A) in Isopropanol werden unmittelbar nach der Umsetzung der Komponenten (a), (b), (c) und (d) bei 85°C 1,6 Teile des im Beispiel 1 angegebenen Tensids als Komponente (B) gegeben. Nach der Tensidzugabe wird das Reaktionsgemisch noch während $^1/_2$ Stunde bei 85°C gehalten und anschließend mit 4 Teilen Eisessig versetzt und mit 222,3 Teilen entionisiertem Wasser verdünnt.

Man erhält 363,3 Teile einer dünnflüssigen Lösung, deren Gehalt, berechnet auf Trockensubstanz, 30% und deren pH-Wert 5,8 beträgt.

Die wie in Beispielen 1 bis 20 gemessene Salzverträglichkeit der erhaltenen Lösung des Komponentengemisches aus (A) und (B) beträgt 2,38 g $Na_2SO_4$/l. Zum Vergleich beträgt die Salzverträglichkeit der gemäß Vorschrift D und gemäß Beispielen 1 bis 21 analog, jedoch in Abwesenheit des Tensids als Komponente (B) mit Eisessig auf pH 5,8 eingestellte und mit Wasser auf den Gehalt von 30% verdünnte Lösung des Umsetzungsproduktes [Komponente (A) allein] 0,58 g $Na_2SO_4$/l.

## Beispiel 22

100 kg gebleichter Sulfitzellstoff aus Fichte und Buche im Gewichtsverhältnis 1 : 1 werden in einem Holländer in üblicher Weise zu einem Schopper-Riegler-Mahlgrad von 35° gemahlen.

Durch Verdünnung mit $Na_2SO_4$-haltigem Wasser wird eine Faserstoffsuspension hergestellt, deren Gehalt an Feststoff (Stoffdichte) 0,85% und an $Na_2SO_4$ 1,5 g/l beträgt. Aus dieser Faserstoffsuspension erfolgt die Papierherstellung kontinuierlich in einer Kämmerermaschine (Laufgeschwindigkeit: 3 m/Minute) unter Zusatz 15 Sekunden vor dem Stoffauflauf auf dem Sieb von 1,8%, berechnet auf den Feststoffgehalt der Faserstoffsuspension, der 30,5%igen Lösung des erfindungsgemäß verwendeten Komponentengemisches aus (A) und (B) gemäß Beispiel 1.

Ein Teil des hergestellten geleimten Papiers wird in senkrechter Stellung während 24 Stunden bei 23°C und 50% relativer Feuchtigkeit klimatisiert.

Die erhaltene Massenleimung des so hergestellten Papiers wird vor und nach der Klimatisierung mit den nachfolgenden Tests beurteilt:

### Wasseraufnahme nach Cobb bei 30 Sekunden Einwirkungsdauer (WA $Cobb_{30}$) gemäß DIN 53 132

Je tiefer die Wasseraufnahme, desto besser ist die Leimung des behandelten Papiers.

### Tintenschwimmdauer (TSD) mit Prüftinte gemäß DIN 53 126

In eine Porzellanschale von 10 × 12 cm wird so viel Papier-Prüftinte Blau gemäß DIN 53 126 gegossen, bis ein Niveau von 0,5 cm erreicht ist. Das zu prüfende Papier wird zu Schiffchen mit aufgestelltem Rand (Größe 4×4 cm) gefaltet. Mittels einer Pinzette werden die Schiffchen auf die Tintenfläche aufgesetzt. Gleichzeitig wird eine Stoppuhr ausgelöst und die Zeit gemessen, bis ein sichtbares Durchschlagen der Prüftinte erfolgt. Die Resultatangabe erfolgt in Minuten.

Je länger die Prüftinte braucht, um durch das geleimte Papier zu schlagen, desto besser ist die Leimung.

Die Testergebnisse des unter Zusatz des erfindungsgemäß verwendeten Komponentengemisches aus (A) und (B) gemäß Beispiel 1 geleimten Papiers sind in der nachfolgenden Tabelle II zusammengestellt. Zum Vergleich werden in Tabelle II die Testergebnisse des unter Zusatz einer gemäß Vorschrift A hergestellten und analog Beispiel 1 verdünnten, jedoch in Abwesenheit des Tensids (B) erhaltenen Lösung des bekannten Umsetzungsproduktes (A) geleimten Papiers ebenfalls angegeben.

Tabelle II

| Geleimtes Papier unter Zusatz des erfindungsgemäß verwendeten Komponentengemisches aus (A) und (B) gemäß Beispiel 1 | | | | Geleimtes Papier unter Zusatz eines bekannten Umsetzungsproduktes (A) gemäß Beispiel 1, jedoch in Abwesenheit der Komponente (B) | | | |
|---|---|---|---|---|---|---|---|
| vor Klimatisierung | | nach Klimatisierung | | vor Klimatisierung | | nach Klimatisierung | |
| WA $Cobb_{30}$ g/m$^2$ | TSD Min. | WA $Cobb_{30}$ g/m$^2$ | TSD Min. | WA $Cobb_{30}$ g/m$^2$ | TSD Min. | WA $Cobb_{30}$ g/m$^2$ | TSD Min. |
| 80 | 20 | 24 | 20 | 105 | 2 | 86 | 3 |

Ähnliche Ergebnisse der Massenleimung werden unter Zusatz in die Fasersuspension der erfindungsgemäß verwendeten Komponentengemische aus (A) und (B) gemäß einem der Beispiele 2 bis 21 erzielt.

## Beispiel 23

Ein Filterpapier aus reiner Cellulose mit einem Flächengewicht von 100 g/m$^2$ wird mit einer Geschwindigkeit von 4 m/Minute und einem Anpreßdruck von 10 bar mit einer wäßrigen Flotte foulardiert, die durch Verdünnung mit Wasser der gemäß Beispiel 1 erhaltenen 30,5%igen Lösung 0,1% des Komponentengemisches aus (A) und (B), bezogen auf Trockensubstanz, enthält. Zusätzlich enthält die wäßrige Flotte 0,25, 0,50, 1,0 und 1,5 g/l $Na_2SO_4$. Das foulardierte Papier wird während 20 Minuten bei 90°C getrocknet und anschließend in senkrechter Stellung während 24 Stunden bei 23°C und 50% relativer Feuchtigkeit klimatisiert. Der Flächenauftrag an Komponentengemisch aus (A) und (B), berechnet auf Trockensubstanz, beträgt 100 mg/m$^2$. Die erhaltene Oberflächenleimung des so behandelten Papiers wird nach der Klimatisierung mit dem in Beispiel 22 angegebenen WA $Cobb_{30}$ und TSD-Tests beurteilt. Die Testergebnisse des unter Zusatz des erfindungsgemäß verwendeten Komponentengemisches aus (A) und (B) gemäß Beispiel 1 geleimten Papiers sind in der nachfolgenden Tabelle III zusammengestellt. Zum Vergleich werden in Tabelle III die Testergebnisse des unter Zusatz einer gemäß Vorschrift A hergestellten und analog Beispiel 1 verdünnten, jedoch in Abwesenheit des Tensids (B) erhaltenen Lösung des bekannten Umsetzungsproduktes (A) geleimten Papiers ebenfalls angegeben.

Tabelle III

| Gehalt an $Na_2SO_4$ der Leimflotte in g/l | Geleimtes Papier unter Zusatz des erfindungsgemäß verwendeten Komponentengemisches aus (A) und (B) gemäß Beispiel 1 | | Geleimtes Papier unter Zusatz eines bekannten Umsetzungsproduktes (A) gemäß Beispiel 1, jedoch in Abwesenheit der Komponente (B) | |
|---|---|---|---|---|
| | WA $Cobb_{30}$ g/m$^2$ | TSD Min. | WA $Cobb_{30}$ g/m$^2$ | TSD Min. |
| 0,25 | 16 | >25 | 21 | >25 |
| 0,50 | 16 | >25 | 180 | 2 |
| 1,0 | 18 | >25 | 215 | 0 |
| 1,5 | 17 | >25 | 220 | 0 |

Ähnliche Ergebnisse werden bei Verwendung von wäßrigen Leimflotten erzielt, die 0,1% des erfindungsgemäß verwendeten Komponentengemisches aus (A) und (B) gemäß einem der Beispiele 2 bis 13 erhalten.

## Beispiel 24

Man verfährt wie in Beispiel 23 angegeben, setzt jedoch 0,1%, bezogen auf Trockensubstanz, des Komponentengemisches aus (A) und (B), die durch Verdünnung mit Wasser der gemäß Beispielen 14

bis 20 (an Stelle von Beispiel 1) erhaltenen 30,5%igen Lösung und der gemäß Beispiel 21 erhaltenen 30%igen Lösung ein und verwendet eine Flotte, die 1,0 g/l $Na_2SO_4$ enthält. Die Testergebnisse der erhaltenen Oberflächenleimung nach der Klimatisierung sind in der nachfolgenden Tabelle IV zusammengestellt.

Tabelle IV

| Beispiel, nach welchem das Komponentengemisch aus (A) und (B) erhalten wird | WA $Cobb_{30}$ g/m² | TSD Min. |
|---|---|---|
| 14 | 21 | >25 |
| 15 | 19 | >25 |
| 16 | 20 | >25 |
| 17 | 28 | >25 |
| 18 | 21 | >25 |
| 19 | 41 | >25 |
| 20 | 31 | >25 |
| 21 | 25 | >25 |

**Patentansprüche**

1. Verwendung eines Komponentengemisches als Papierleimungsmittel, dadurch gekennzeichnet, daß es als Komponente (A) ein Umsetzungsprodukt aus

(a) 1,0 Epoxygruppenäquivalent eines Diglycidyläthers des 2,2-Bis-(4'-hydroxyphenyl)-propans,
(b) 0,10 bis 0,85 Aminogruppenäquivalent mindestens eines primären Fettamins mit 12 bis 24 Kohlenstoffatomen,
(c) 0,1 bis 2,0 Aminogruppenäquivalenten eines Polyalkylenpolyaminoamids aus
  (c') einer polymerisierten, aliphatischen, ungesättigten Fettsäure, die sich von Fettsäuren mit 16 bis 22 Kohlenstoffatomen ableitet, und
  (c") einem aliphatischen Polyalkylenpolyamin mit 4 bis 12 Kohlenstoffatomen und
(d) 0 bis 1,0 Mol eines Epihalogenhydrins oder eines Nitrils einer äthylenisch ungesättigten Monocarbonsäure mit 3 oder 4 Kohlenstoffatomen,

wobei die Komponente (A) in Gegenwart eines inerten, organischen Lösungsmittels gegebenenfalls bei erhöhter Temperatur erhältlich ist, und als Komponente (B) mindestens ein Tensid enthält,
wobei das Gemisch durch Zugabe mindestens einer anorganischen oder organischen Säure mit höchstens 4 Kohlenstoffatomen einen pH-Wert von 3 bis 7 aufweist und wasserlöslich oder wasseremulgierbar ist.

2. Verwendung nach Anspruch 1, dadurch gekennzeichnet, daß das Gemisch als Komponente (A) ein Umsetzungsprodukt enthält, welches in Gegenwart eines inerten, organischen Lösungsmittels bei 60 bis 95° C erhältlich ist.

3. Verwendung nach Anspruch 2, dadurch gekennzeichnet, daß das Gemisch als Komponente (A) ein Umsetzungsprodukt enthält, welches in Gegenwart eines cycloaliphatischen oder aliphatischen Äthers mit 2 Sauerstoffatomen und 4 bis 8 Kohlenstoffatomen oder in Gegenwart eines Alkanols mit 1 bis 4 Kohlenstoffatomen als inertes, organisches Lösungsmittel erhältlich ist.

4. Verwendung nach einem der Ansprüche 1 bis 3, dadurch gekennzeichnet, daß das Gemisch als Komponente (A) ein Umsetzungsprodukt enthält, welches durch Vorlegen der Komponente (b) und anschließendes Umsetzen zuerst mit der Komponente (a), dann mit der Komponente (c) und gegebenenfalls zuletzt mit der Komponente (d) erhältlich ist.

5. Verwendung nach Anspruch 1, dadurch gekennzeichnet, daß das Gemisch als Komponente (B) alkoxylierte und veresterte oder quaternierte Fettamine, Fettsäuren, Fettsäureamide, Alkylphenole

oder Alkanole mit je 8 bis 22 Kohlenstoffatomen im Fett- und Alkylrest, ein Sulfobernsteinsäurederivat, das mit einem oder zwei gegebenenfalls alkoxylierten Alkyl- oder Alkenylresten mit je 8 bis 22 Kohlenstoffatomen im Alkyl- und Alkenylteil substituiert ist oder ein Imidazoliniumderivat, das in 1-Stellung mit einem Carboxymethyl- und gegebenenfalls einem Äthyl-2(Carboxymethyläther)-rest und in 2-Stellung mit Alkyl oder Alkenyl mit je 8 bis 22 Kohlenstoffatomen substituiert ist, enthält, wobei die Komponente (B) gegebenenfalls als Alkalimetall-, Erdalkalimetall- oder Ammoniumsalz vorliegt.

6. Verwendung nach einem der Ansprüche 1 bis 5, dadurch gekennzeichnet, daß das Gemisch die Komponenten (A) und (B) in einem Gewichtsverhältnis (A) : (B) von 90 : 10 bis 99 : 1 enthält.

7. Verwendung nach einem der Ansprüche 1 bis 6, dadurch gekennzeichnet, daß der pH-Wert des Gemisches von 3 bis 7 durch Zugabe der Salz-, Salpeter-, Phosphor- oder Sulfaminsäure, einer gesättigten Mono- oder Dicarbonsäure mit höchstens 4 Kohlenstoffatomen oder deren Gemische eingestellt ist.

8. Verwendung nach einem der Ansprüche 1 bis 7, dadurch gekennzeichnet, daß das Gemisch als wäßrige, lagerstabile Lösungen oder Emulsionen vorliegt.

**Claims**

1. Use of a composition as sizing agent for paper, which composition contains, as component (A), a reaction product of

(a) 1 epoxide group equivalent of a diglycidyl ether of 2,2-bis-(4'-hydroxyphenyl)propane,
(b) 0.1 to 0.85 amino group equivalent of at least one primary fatty amine containing 12 to 24 carbon atoms,
(c) 0.1 to 2 amino group equivalents of a polyalkyleneaminopolyamide of
 (c') a polymerised aliphatic unsaturated fatty acid which is derived from fatty acids containing 16 to 22 carbon atoms, and
 (c") an aliphatic polyalkylenepolyamine containing 4 to 12 carbon atoms, and
(d) 0 to 1 mole of an epihalohydrin or of a nitrile of an ethylenically unsaturated monocarboxylic acid of 3 or 4 carbon atoms,

said component (A) being obtained in the presence of an inert organic solvent, optionally at elevated temperature, and as component (B), at least one surfactant, which composition is adjusted to a pH value of 3 to 7 by addition of at least one inorganic or organic acid containing at most 4 carbon atoms, and is soluble or emulsifiable in water.

2. Use according to claim 1, wherein the composition contains, as component (A), a reaction product which is obtained in the presence of an inert organic solvent in the temperature range from 60° to 95°C.

3. Use according to claim 2, wherein the composition contains, as component (A), a reaction product which is obtained in the presence of a cycloaliphatic or aliphatic ether containing 2 oxygen atoms and 4 to 8 carbon atoms, or in the presence of an alkanol containing 1 to 4 carbon atoms, as inert organic solvent.

4. Use according to any one of claims 1 to 3, wherein the composition contains, as component (A), a reaction product which is obtained by reaction of component (b) with component (a) and subsequent reaction with component (c) and, optionally, finally with component (d).

5. Use according to claim 1, wherein the composition contains, as component (B), an alkoxylated and esterified or quaternised fatty amine, fatty acid, fatty acid amide, alkylphenol or alkanol, each containing 8 to 22 carbon atoms in the fatty and alkyl moiety respectively, a sulfosuccinic acid derivative which is substituted by one or two unsubstituted or alkoxylated alkyl or alkenyl radicals, each containing 8 to 22 carbon atoms in the alkyl and alkenyl moiety respectively, or is an imidazolinium derivative which is substituted in the 1-position by a carboxymethyl radical and, optionally, by an ethyl-2-(carboxymethyl ether) radical, and in the 2-position by alkyl or alkenyl, each of 8 to 22 carbon atoms, said component (B) being optionally in the form of an alkali metal salt, alkaline earth metal salt or ammonium salt.

6. Use according to any one of claims 1 to 5, wherein the composition contains components (A) and (B) in the ratio of (A) to (B) of 90 : 10 to 99 : 1.

7. Use according to any one of claims 1 to 6, wherein the pH value of the composition is adjusted to 3 to 7 by addition of hydrochloric acid, nitric acid, phosphoric acid or sulfamic acid, or of a saturated mono- or dicarboxylic acid containing at most 4 carbon atoms, or of a mixture thereof.

8. Use according to any one of claims 1 to 7, wherein the composition is in the form of an aqueous, stable solution or emulsion.

**Revendications**

1. Utilisation d'un mélange de composants en tant qu'agent d'encollage pour papier, caractérisé par le fait qu'il contient en tant que composant (A) un produit de réaction obtenu à partir de

(a) 1,0 équivalent des groupes époxy d'un diglycidyléther du 2,2-bis-(4'-hydroxyphényl)-propane,
(b) de 0,10 à 0,85 équivalent des groupes amino d'au moins une amine grasse primaire ayant de 12 à 24 atomes de carbone,
(c) de 0,1 à 2,0 équivalents des groupes amino d'un polyalkylène-polyamino-amide constitué de
 (c') un acide gras aliphatique non saturé, polymérisé, qui dérive d'acides gras contenant de 16 à 22 atomes de carbone et
 (c") une polyalkylène-polyamine aliphatique ayant de 4 à 12 atomes de carbone, et
(d) de 0 à 1,0 mole d'une épihalohydrine ou d'un nitrile d'un monoacide carboxylique à insaturation éthylénique possédant 3 ou 4 atomes de carbone,

le composant (A) étant préparable en présence d'un solvant organique inerte, éventuellement à température élevée, et en tant que composant (B), au moins un agent tensio-actif,
le mélange présentant, par addition d'au moins un acide organique ou minéral ayant au plus 4 atomes de carbone, un pH d'une valeur comprise entre 3 et 7, et étant soluble dans l'eau ou émulsionnable dans l'eau.

2. Utilisation selon la revendication 1, caractérisée par le fait que le mélange contient en tant que composant (A) un produit de réaction qui est préparable en présence d'un solvant organique inerte à une température comprise entre 60 et 95° C.

3. Utilisation selon la revendication 2, caractérisée par le fait que le mélange contient en tant que composant (A) un produit de réaction qui est préparable en présence d'un éther aliphatique ou cyclo-aliphatique ayant 2 atomes d'oxygène et de 4 à 8 atomes de carbone ou en présence d'un alcanol contenant de 1 à 4 atomes de carbone en tant que solvant organique inerte.

4. Utilisation selon l'une des revendications 1 à 3, caractérisée par le fait que le mélange contient en tant que composant (A) un produit de réaction qui est préparable en introduisant le composant (b) et en le faisant ensuite réagir d'abord avec le composant (a) puis avec le composant (c) et enfin, éventuellement, avec le composant (d).

5. Utilisation selon la revendication 1, caractérisée par le fait que le mélange contient en tant que composant (B) des amines grasses alcoxylées et estérifiées ou rendues quaternaires, des acides gras, des amides d'acides gras, des alkyl-phénols ou des alcanols ayant chacun de 8 à 22 atomes de carbone dans le radical alkyle et dans le radical aliphatique, un dérivé de l'acide sulfosuccinique qui est substitué avec un ou deux groupes alkyle ou alcényle éventuellement alcoxylés contenant chacun de 8 à 22 atomes de carbone dans la chaîne alkyle et dans la chaîne alcényle, ou un dérivé imidazolinium qui est substitué en position 1 avec un groupe carboxyméthyle et éventuellement un groupe éthyl-2(carboxyméthyléther) et en position 2 avec un groupe alkyle ou alcényle ayant chacun de 8 à 22 atomes de carbone, le composant (B) étant éventuellement présent sous forme de sel de métal alcalin, de sel de métal alcalino-terreux ou de sel d'ammonium.

6. Utilisation selon l'une des revendications 1 à 5, caractérisée par le fait que le mélange contient les composants (A) et (B) dans une proportion en poids (A) : (B) allant de 90 : 10 à 99 : 1.

7. Utilisation selon l'une des revendications 1 à 6, caractérisée par le fait que le pH du mélange est ajusté à une valeur comprise entre 3 et 7 par addition de l'acide chlorhydrique, nitrique, phosphorique ou sulfamique, d'un mono- ou diacide carboxylique saturé contenant au plus 4 atomes de carbone, ou de mélanges de ceux-ci.

8. Utilisation selon l'une des revendications 1 à 7, caractérisée par le fait que le mélange est présent sous forme de solutions ou d'émulsions aqueuses stables au stockage.